# EUROPEAN PATENT APPLICATION

(11) **EP 4 844 927 A1**
(43) Date of publication of application: **25.11.2026**
(21) Application number: 26179887.0
(22) Date of filing: 20.05.2026
(51) Int. Cl.: H01M 50/342, H01M 50/15, F16K 17/00, F16K 17/16

(54) **RECHARGEABLE BATTERY**

(30) Priority: 23.05.2025 KR 20250067661
(71) Applicant: SAMSUNG SDI CO., LTD., Yongin-si, Gyeonggi-do 17084 (KR)
(72) Inventor: GUEN, Minhyung, 17084 Yongin-si, Gyeonggi-do (KR)
(74) Representative: Bardehle Pagenberg Partnerschaft mbB Patentanwälte Rechtsanwälte

(57) **Abstract**

A rechargeable battery includes an electrode assembly including a first electrode, a second electrode, and a separator interposed between the first electrode and the second electrode, a case accommodating the electrode assembly, a cap plate coupled to an opening of the case, a vent plate installed in a vent hole of the cap plate, and a first vent plate and a second vent plate installed inside and outside the vent plate in a thickness direction, respectively, and the cap plate includes a gas accommodation space between the first vent plate and the second vent plate that extends beyond the inner surface of the vent hole.

## Description

### CROSS-REFERENCE TO RELATED APPLICATION

This present application claims priority to Korean Patent Application No. 10-2025-0067661, filed on May 23, 2025, in the Korean Intellectual Property Office, the entire disclosure of which is incorporated herein by reference.

### BACKGROUND OF THE INVENTION

### (a) Field of the Invention

The present disclosure relates to a rechargeable battery capable of reducing internal pressure of a cell during charging and discharging.

### (b) Description of the Related Art

Unlike a primary battery, a rechargeable battery is a battery that repeatedly performs charging and discharging. The small capacity rechargeable battery may be used in portable small electronic devices such as mobile phones, laptop computers, and camcorders, and the large capacity rechargeable battery may be used as power for driving a motor of a hybrid vehicle and an electric vehicle.

For example, a rechargeable battery includes an electrode assembly that functions to charge and discharge, a case that accommodates the electrode assembly and an electrolyte, a cap plate that is coupled to an opening in the case, and an electrode terminal that is disposed on the cap plate and electrically connected to the electrode assembly.

The cap plate has a terminal hole for disposing an electrode terminal, an electrolyte injection port for injecting an electrolyte, and a vent hole for releasing internal pressure. A vent plate is disposed in the vent hole to close the vent hole. When the internal pressure reaches the set pressure, the notch in the vent plate is cut open to open the vent hole and release the internal pressure.

During a cell event, these vent holes and vent plates release the internal pressure of the cell, but do not relieve the pressure inside the cell before the cell event. As the pressure inside the cell increases, the cell capacity may decrease and the internal resistance may increase.

### SUMMARY OF THE INVENTION

One embodiment of the present disclosure provides a rechargeable battery that may relieve internal pressure of a cell due to charging and discharging.

A rechargeable battery according to one embodiment of the present disclosure includes an electrode assembly including a first electrode, a second electrode, and a separator interposed between the first electrode and the second electrode, a case accommodating the electrode assembly, a cap plate coupled to an opening of the case, a vent plate installed in a vent hole of the cap plate, and a first vent plate and a second vent plate installed on an inner side and an outer side of the vent plate in a thickness direction, respectively, wherein the cap plate has a gas accommodation space between the first vent plate and the second vent plate that extends beyond an inner surface of the vent hole.

The cap plate may have a first mounting groove, located on an inner side in the thickness direction, that is expanded beyond an inner surface of the vent hole and corresponds to a thickness of the first vent plate, and the first vent plate can be welded to the first mounting groove.

The gas accommodation space may include a corresponding space corresponding to the area of the first mounting groove.

The gas accommodation space may include an expansion space formed in the length direction of the cap plate to be larger than the area of the first mounting groove.

At least one first through-hole penetrating in the thickness direction may be provided so as to be connected to the gas accommodation space in the first mounting groove of the cap plate.

The at least one first through-hole may be formed in plurality, and may be formed to have a maximum size at a center in a width direction of the cap plate, and may be formed to have sizes that gradually decrease toward both ends in the width direction.

The cap plate may have a second mounting groove that is on an outer side in the thickness direction, is expanded with respect to an inner surface of the vent hole, and corresponds to a thickness of the second vent plate, and the second vent plate can be welded to the second mounting groove.

The gas accommodation space may include a corresponding space corresponding to the area of the second mounting groove.

The gas accommodation space may include an expansion space formed in the length direction of the cap plate to be larger than the area of the second mounting groove.

At least one second through-hole penetrating in the thickness direction may be provided so as to be connected to the gas accommodation space in the second mounting groove of the cap plate.

The at least one second through-hole may be formed in plurality, and may be formed to have a maximum size at a center in a width direction of the cap plate, and may be formed to have sizes that gradually decrease toward both ends in the width direction.

The cap plate can form a gas accommodation space positioned between the first vent plate and the second vent plate in the thickness direction and extending beyond the inner surface of the vent hole.

The gas accommodation space may be formed to be concave toward a center of the vent hole, by being further extended from the cap plate outwardly in the longitudinal direction of the cap plate, beyond the outermost edge of each of the first mounting groove on which the first vent plate is seated and the second mounting groove on which the second vent plate is seated.

The cap plate may form a first accommodation space extending further than the inner surface of the vent hole on the inner side in the thickness direction, and the first vent plate may be welded to the inner side in the thickness direction by interposing a first mounting plate that is larger in the length direction of the cap plate than the first accommodation space.

The cap plate may form a first accommodation space extending further than the inner surface of the vent hole on the outer side in the thickness direction, and the first vent plate may be welded to the outer side in the thickness direction by interposing a first mounting plate that is larger in the length direction of the cap plate than the first accommodation space.

The cap plate may form a second accommodation space extending further than the inner surface of the vent hole on the outer side in the thickness direction, and the second vent plate may be welded to the outer side in the thickness direction by interposing a second mounting plate that is larger in the length direction of the cap plate than the second accommodation space.

The second mounting plate may further include a third accommodation space that extends further in the thickness direction of the cap plate than the second accommodation space.

The third accommodation space may be extended further in the length direction of the cap plate than the second accommodation space.

In this way, one embodiment of the present disclosure can alleviate the pressure inside the cell generated during charging and discharging, owing to the first and second vent plates arranged in the thickness direction of the cap plate within the vent hole of the cap plate, and the gas accommodation space extending beyond the inner surface of the vent hole between the first and second vent plates. Therefore, an embodiment may prevent a decrease in cell capacity, prevent an increase in internal resistance, and/or improve the capacity quality of a rechargeable battery.

### BRIEF DESCRIPTION OF THE DRAWINGS

FIG. 1 is a perspective view of a rechargeable battery according to a first embodiment of the present disclosure.
FIG. 2 is a cross-sectional view taken along line II-II of FIG. 1.
FIG. 3 is a detailed cross-sectional view illustrating a first vent plate, a second vent plate, and a gas accommodation space provided in the vent hole of FIG. 2.
FIG. 4 is a detailed plan view showing the vent hole and gas accommodation space provided in the cap plate of FIG. 3.
FIG. 5 is a cross-sectional detailed view showing the first and second vent plates and the gas accommodation space provided in the vent hole in a rechargeable battery according to the second embodiment of the present disclosure.
FIG. 6 is a cross-sectional detailed view showing the first and second vent plates and the gas accommodation space provided in the vent hole in a rechargeable battery according to a third embodiment of the present disclosure.
FIG. 7 is a plan view showing a vent hole and a gas accommodation space provided in the vent hole in a rechargeable battery according to a fourth embodiment of the present disclosure.
FIG. 8 is a cross-sectional detailed view showing the first and second vent plates and gas accommodation space provided in the vent hole of FIG. 7.
FIG. 9 is a perspective view of a battery module to which a rechargeable battery of an embodiment of the present disclosure can be applied.

### DETAILED DESCRIPTION OF THE EMBODIMENTS

Hereinafter, various embodiments of the present disclosure will be described in detail with reference to the accompanying drawings so that those skilled in the art may easily implement the present disclosure. However, the present disclosure may be implemented in several different forms and is not limited to the embodiments described herein. In order to clearly explain the present disclosure in the drawings, parts unrelated to the description are omitted, and the same reference numerals are given to the same or similar components throughout the specification.

The rechargeable battery 1 includes first and second electrode terminals (negative and positive electrode terminals) 21, 22 disposed on a cap plate 20. The rechargeable battery may further include an external short circuit part 40 on the side of the negative electrode terminal 21.

For example, the electrode assembly 10 may be formed by placing a first electrode (hereinafter referred to as "negative electrode") 11 and a second electrode (hereinafter referred to as "positive electrode") 12 on both sides of a separator 13 which is an insulator, and then winding the negative electrode 11, the separator 13, and the positive electrode 12 into a jelly roll state or laminating them.

The negative electrode 11 and the positive electrode 12 each include a coated portion 11a, 12a in which an active material is applied to a current collector formed of a metal plate, and an uncoated portion 11b, 12b that is an exposed current collector on which the active material is not applied.

The uncoated portion 11b of the negative electrode 11 is formed at one end of the negative electrode 11, extending along the electrode as it is wound or laminated. The uncoated portion 12b of the positive electrode 12 is formed at one end of the positive electrode 12, extending along the electrode as it is wound or laminated. In this way, the uncoated portions 11b and 12b may be disposed at both ends of the electrode assembly 10, respectively. Also, although not illustrated, the uncoated portions may be disposed side by side at one end of the electrode assembly.

For example, the case 15 is shaped as a substantially rectangular parallelepiped so as to define a space for accommodating the electrode assembly 10 and the electrolyte therein, and an opening connecting the exterior and the interior space is formed on one surface of the rectangular parallelepiped. The opening allows the electrode assembly 10 to be inserted into the interior of the case 15.

The cap plate 20 is disposed in the opening of the case 15 to seal the opening of the case 15. For example, the case 15 and the cap plate 20 may be made of aluminum and welded to each other (one another). Additionally, the cap plate 20 further includes terminal holes H1, H2, an electrolyte injection port 29, and a vent hole 24.

The negative and positive electrode terminals 21 and 22 are electrically and mechanically connected to the electrode assembly 10 and disposed in the terminal holes H1, H2 of the cap plate 20. That is, the negative and positive electrode terminals 21, 22 are electrically connected to the negative and positive electrodes 11, 12 of the electrode assembly 10, respectively. Therefore, the electrode assembly 10 is led out to the outside of the case 15 through the negative and positive electrode terminals 21, 22.

Since the negative and positive electrode terminals 21, 22 have the same structure on the inside of the cap plate 20, the same structure will be described together, and since they have different structures on the outside of the cap plate 20, the different structures will be described separately for each.

The negative and positive electrode terminals 21, 22 include rivet terminals 21a, 22a, each installed in a respective terminal hole H1, H2 of the cap plate 20, flanges 21b, 22b, formed integrally and widely with the rivet terminals 21a, 22a on the inner side of the cap plate 20, and plate terminals 21c, 22c, arranged on the outer side of the cap plate 20 and connected to the rivet terminals 21a, 22a by riveting or welding.

The negative and positive electrode gaskets 36, 37 are disposed between the rivet terminals 21a, 22a of the negative and positive electrode terminals 21, 22 and the inner surfaces of the terminal holes H1, H2, respectively, to provide sealing and electrical insulation between the rivet terminals 21a, 22a of the negative and positive electrode terminals 21 and 22 and the cap plate 20.

The negative and positive electrode gaskets 36, 37 are further extended and disposed between the flanges 21b, 22b and the inner surface of the cap plate 20 to further seal and electrically insulate between the flanges 21b, 22b and the cap plate 20. That is, the negative and positive electrode gaskets 36, 37 prevent electrolyte leakage through the terminal holes H1 and H2 by virtue of the installation of the negative and positive electrode terminals 21 and 22 in the cap plate 20.

The negative and positive electrode lead tabs 51, 52 directly connect the negative and positive electrode terminals 21, 22 to the negative and positive electrodes 11, 12 of the electrode assembly 10, respectively. That is, by coupling the negative and positive electrode lead tabs 51, 52 to the lower ends of the rivet terminals 21a, 22a and caulking the lower ends of the rivet terminals 21a, 22a, the negative and positive electrode lead tabs 51, 52 are thereby connected at the lower ends of the rivet terminals 21a, 22a while being supported by the flanges 21b, 22b.

The negative and positive electrode insulating members 61, 62 are disposed between the negative and positive electrode lead tabs 51, 52 and the cap plate 20, respectively, to electrically insulate the negative and positive electrode lead tabs 51, 52 and the cap plate 20. In addition, the negative and positive electrode insulating members 61, 62 are coupled to the cap plate 20 on one side and surround the negative and positive electrode lead tabs 51, 52 and the rivet terminals 21a, 22a, and flanges 21b, 22b on the other side to stabilize their connection structure.

Meanwhile, the external short circuit part 40 will be described in relation to the plate terminal 21c of the negative electrode terminal 21, and the top plate 46 will be described in relation to the plate terminal 22c of the positive electrode terminal 22.

The external short circuit part 40 on the negative electrode terminal 21 includes a short circuit tab 41 and a short circuit member 43 that are separated or short-circuited in accordance with an internal pressure that may occur during overcharging. The short circuit tab 41 is electrically connected to the rivet terminal 21a of the negative electrode terminal 21 and is disposed outside the cap plate 20 with the insulating member 31 interposed.

An insulating member 31 is disposed between the short circuit tab 41 and the cap plate 20 to electrically insulate the short circuit tab 41 and the cap plate 20. That is, the cap plate 20 maintains an electrically insulated state from the negative electrode terminal 21.

By joining the short circuit tab 41 and the plate terminal 21c to the top of the rivet terminal 21a and staking the top thereof, the short circuit tab 41 and the plate terminal 21c are thereby securely coupled to the top of the rivet terminal 21a. Therefore, the short circuit tab 41 and the plate terminal 21c are fixed to the cap plate 20 with the insulating member 31 interposed therebetween.

The short circuit member 43 is disposed in the short circuit hole 42 formed in the cap plate 20 to seal the short circuit hole 42, thereby receiving the internal pressure of the rechargeable battery. The short circuit tab 41 is connected to the negative electrode terminal 21 and extends along the outside of the short circuit member 43. Therefore, the short circuit tab 41 and the short circuit member 43 correspond to the short circuit hole 42, face each other (one another) to maintain a separated state (solid line state), and may form a short circuit state (phantom line state) by inverting the short circuit member 43 when the internal pressure of the rechargeable battery rises.

The top plate 46 at the side of the positive electrode terminal 22 electrically connects the plate terminal 22c of the positive electrode terminal 22 to the cap plate 20. For example, the top plate 46 is interposed between the plate terminal 22c and the cap plate 20 and penetrates the rivet terminal 22a.

Thus, by coupling the top plate 46 and the plate terminal 22c to the upper end of the rivet terminal 22a and caulking the upper end thereof, the top plate 46 and the plate terminal 22c are coupled to the upper end of the rivet terminal 22a. The plate terminal 22c is disposed outside the cap plate 20 with the top plate 46 interposed therebetween.

Meanwhile, the positive electrode gasket 37 is disposed to further extend between the rivet terminal 22a and the top plate 46. That is, the positive electrode gasket 37 prevents the rivet terminal 22a and the top plate 46 from being directly electrically connected to each other (one another).

Therefore, the rivet terminal 22a is electrically connected to the top plate 46 via the plate terminal 22c. That is, the cap plate 20 is connected to the positive electrode terminal 22 and is positively charged. Accordingly, the short circuit tab 41, which is negatively charged, and the short circuit member 43, which is positively charged, form an external short circuit due to an increase in internal pressure generated during overcharging, thereby safely discharging the current charged in the electrode assembly 10 to the outside.

The electrolyte injection port 29 allows an electrolyte to be injected into the case 15 after the cap plate 20 is coupled to the case 15. After electrolyte injection, the electrolyte injection port 29 is sealed with a sealing plug 28.

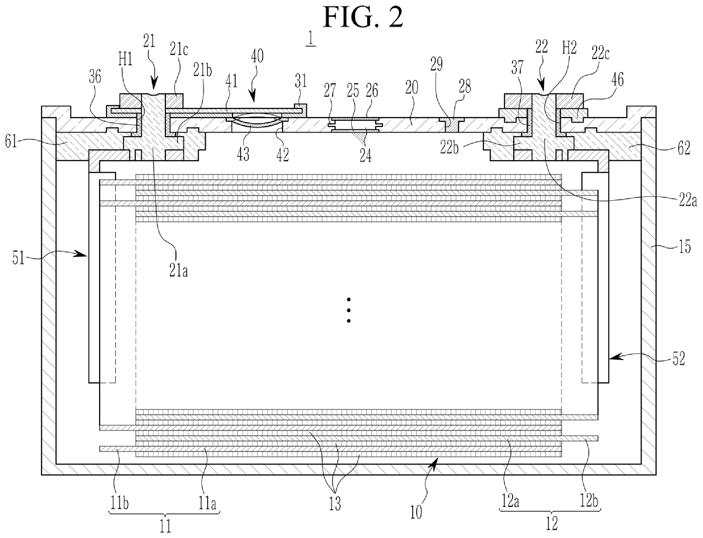

Meanwhile, the rechargeable battery according to an embodiment includes a first vent plate 25 and a second vent plate 26 disposed in a vent hole 24. The first vent plate 25 and the second vent plate 26 are disposed, respectively, on the inner and outer sides of the cap plate 20 along its thickness direction (up-down direction in FIG. 2).

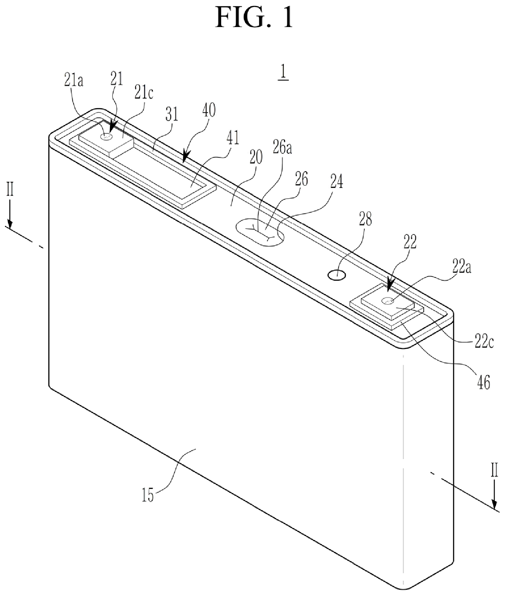

The first vent plate 25 and the second vent plate 26 include a notch configured to be ruptured to open the vent hole 24 by the internal pressure of the rechargeable battery 1. FIG. 1 illustrates a notch 26a provided in the second vent plate 26. Although not shown, the same notch is provided in the first vent plate 25.

Therefore, the internal pressure acts on the entire area of the first vent plate 25 to enable stable cutting of the notch, and the internal pressure acts on the entire area of the second vent plate 26 to enable stable cutting of the notch 26a.

It is necessary to relieve the pressure inside the cell generated during charging and discharging of the rechargeable battery 1. To this end, in a first embodiment, the cap plate 20 includes, between the first vent plate 25 and the second vent plate 26, a gas accommodation space 27 that extends beyond the inner surface 241 of the vent hole 24.

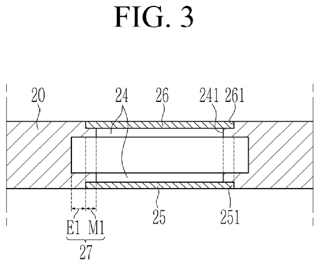

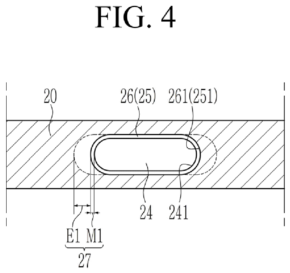

FIG. 3 is a detailed cross-sectional view illustrating a first vent plate, a second vent plate, and a gas accommodation space provided in the vent hole of FIG. 2, and FIG. 4 is a detailed plan view showing the vent hole and gas accommodation space provided in the cap plate of FIG. 3.

Referring to FIGS. 1 to 3 and FIG. 4, the cap plate 20 of the first embodiment includes a first mounting groove 251 that is expanded inwardly in the thickness direction of the cap plate 20 (up-down direction in FIGS. 2 and 3) beyond an inner surface 241 of the vent hole 24 and corresponds to a thickness of the first vent plate 25, and the first vent plate 25 is seated in the first mounting groove 251 and welded thereto. The first mounting groove 251 is formed to extend in the length direction (left-right direction of FIG. 4) and the width direction (up-down direction of FIG. 4) of the cap plate 20.

In addition, the cap plate 20 includes a second mounting groove 261 which is formed on an outer surface of the cap plate 20 in the thickness direction (up-down direction in FIGS. 2 and 3), is expanded beyond an inner surface 241 of the vent hole 24, and corresponds to a thickness of the second vent plate 26. The second vent plate 26 is seated in the second mounting groove 261 and welded thereto. The second mounting groove 261 is formed to extend in the length direction (left-right direction in FIG. 4) and width direction (up-down direction in FIG. 4) of the cap plate 20.

The gas accommodation space 27 includes a corresponding space M1 corresponding to regions of the first and second mounting grooves 251 and 261. The gas accommodation space 27 includes an expansion space E1 formed larger than the regions of the first and second mounting grooves 251, 261 in the length direction of the cap plate 20. That is, the gas accommodation space 27 is formed by including a corresponding space M1 corresponding to the regions of the first and second mounting grooves 251, 261 and an expansion space E1 not corresponding to the regions of the first and second mounting grooves 251, 261.

When the vent hole 24 is opened on the inner side in the thickness direction of the cap plate 20 due to the incision of the first vent plate 25 caused by the pressure inside the cell generated during charging and discharging of the rechargeable battery 1, although almost simultaneous, the corresponding space M1 formed to be larger than the vent hole 24 primarily relieves the internal pressure of the cell, and the expansion space E1 further expanded from the corresponding space M1 secondarily further relieves the internal pressure of the cell following the corresponding space M1.

Accordingly, the rechargeable battery 1 may be operated in a state in which the first vent plate 25 is opened and the second vent plate 26 is closed. In this case, the rechargeable battery 1 of the first embodiment may prevent a decrease in cell capacity and an increase in internal resistance due to the relaxation of the internal pressure of the cell in the gas accommodation space 27, and may also improve the quality of the rechargeable battery 1 in terms of its capacity.

Of course, the second vent plate 26 may be cut by the internal pressure within the cell, whereby the pressure is mitigated. In this case, the pressure inside the cell may be more safely discharged to the vent hole 24 in a mitigated state.

Meanwhile, the gas accommodation space 27, located between the first vent plate 25 and the second vent plate 26 with respect to the thickness direction (up-down direction of FIG. 3) of the cap plate 20, is formed to expand further in the length direction (left-right direction of FIG. 3) of the cap plate 20 beyond the inner surface 241 of the vent hole 24.

The gas accommodation space 27 is further extended outwardly from the cap plate 20 in the longitudinal direction (left-right direction of FIG. 3) of the cap plate 20 beyond the outermost edge of each of the first seating groove 251 in which the first vent plate 25 is seated and the second seating groove 261 in which the second vent plate 26 is seated, and is formed concavely toward the center of the vent hole 24.

When the first vent plate 25 is ruptured by the internal pressure of the cell, the second vent plate 26 is exposed to a pressure corresponding to the vent hole 24, said pressure being exerted by the internal pressure of the cell, and the gas accommodation space 27 expanded outside the vent hole 24 is exposed to the accommodation pressure in the inner, outer, and lateral directions of the cap plate 20.

As the gas accommodation space 27 is formed as a concave curved surface toward the center of the vent hole 24, as compared to an angled surface, an internal pressure of the cell may act more uniformly in the length direction and the width direction of the cap plate 20 with respect to the inner surface of the gas accommodation space 27.

Accordingly, due to the cutting of the first vent plate 25, the reduced internal pressure of the cell acts on the uncut second vent plate 26 and acts uniformly on an inner surface of the gas accommodation space 27. Due to the relaxation of the internal pressure of the cell, a decrease in cell capacity can be prevented, an increase in internal resistance can be prevented, and also the quality with respect to the capacity of the rechargeable battery 1 can be improved.

Hereinafter, various embodiments of the present disclosure will be described. For the embodiments to be described below, when compared with the first embodiment and the previously described embodiments, identical configurations will be omitted, and only distinct configurations will be described.

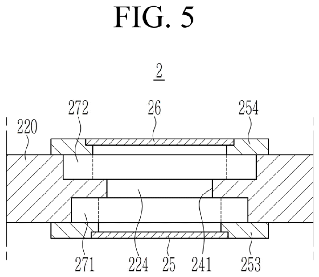

FIG. 5 is a cross-sectional detailed view showing the first and second vent plates and the gas accommodation space provided in the vent hole in a rechargeable battery according to the second embodiment of the present disclosure. Referring to FIG. 5, in the rechargeable battery 2 of the second embodiment, the cap plate 220 forms first and second accommodation spaces 271, 272 that extend more than the inner surface 241 of the vent hole 224, on the inner and outer sides in the thickness direction (lower and upper sides in FIG. 5).

The first and second vent plates 25, 26 are welded to the inner and outer sides (lower and upper sides in FIG. 5) in the thickness direction (up-down direction in FIG. 5) by interposing the first and second mounting plates 253, 254 that are larger than the first and second accommodation spaces 271, 272 in the length direction (left-right direction in FIG. 5) of the cap plate 220.

The first and second mounting plates 253 and 254 ensure the sufficient provision of the first and second accommodation spaces 271 and 272 formed in the cap plate 220, and facilitate the installation of the first and second vent plates 25 and 26.

When the vent hole 224 is opened on the inner side in the thickness direction of the cap plate 220 due to the cutting of the first vent plate 25, which is caused by the pressure inside the cell generated during charging and discharging of the rechargeable battery 2, then, although almost simultaneously, the first accommodation space 271 formed larger than the vent hole 224 primarily relieves the pressure inside the cell, and the second accommodation space 272 further expanded in the thickness direction from the first accommodation space 271 secondarily further relieves the pressure inside the cell following the first accommodation space 271.

Accordingly, the first vent plate 25 can be operated in an open state and the second vent plate 26 can be operated in a closed state, and in this case, the rechargeable battery 2 of the second embodiment can prevent a decrease in cell capacity and an increase in internal resistance due to the relaxation of the internal pressure of the cell in the first and second accommodation spaces 271, 272, and can also improve the quality of the rechargeable battery 2 with respect to its capacity.

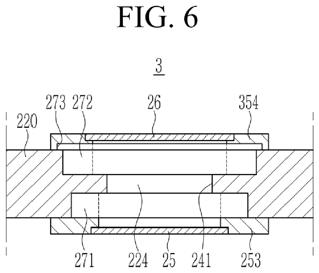

FIG. 6 is a cross-sectional detailed view showing the first and second vent plates and the gas accommodation space provided in the vent hole in a rechargeable battery according to a third embodiment of the present disclosure. Referring to FIG. 6, in the rechargeable battery 3 of the third embodiment, the second mounting plate 354 further includes a third accommodation space 273 that extends further in the thickness direction (up-down direction in FIG. 6) of the cap plate 220 than the second accommodation space 272. The third accommodation space 273 is extended further in the length direction of the cap plate 220 (left-right direction in FIG. 6) than the second accommodation space 272.

When the vent hole 224 opens on the inner side in the thickness direction of the cap plate 220 due to the cutout of the first vent plate 25 by the pressure inside the cell generated during charging and discharging of the rechargeable battery 3, although almost simultaneously, the first accommodation space 271 formed larger than the vent hole 224 primarily relieves the pressure inside the cell. The second accommodation space 272, further expanded in the thickness direction from the first accommodation space 271, secondarily further relieves the pressure inside the cell following the first accommodation space 271. The third accommodation space 273, further expanded in the thickness direction from the second accommodation space 272, thirdarily further relieves the pressure inside the cell following the second accommodation space 272.

Therefore, the first vent plate 25 may be opened and the second vent plate 26 may be driven in a closed state, and in this case, the rechargeable battery 3 of the third embodiment may prevent a decrease in cell capacity, prevent an increase in internal resistance, and improve the capacity characteristics of the rechargeable battery 3 due to the relaxation of the pressure inside the cell in the first, second, and third accommodation spaces 271, 272, and 273.

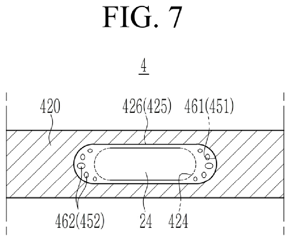

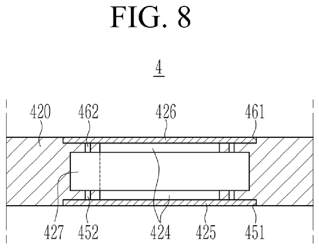

FIG. 7 is a plan view showing a vent hole and a gas accommodation space provided in the vent hole in a rechargeable battery according to a fourth embodiment of the present disclosure. FIG. 8 is a cross-sectional detailed view showing the first and second vent plates and gas accommodation space provided in the vent hole of FIG. 7.

Referring to FIGS. 7 and 8, in the rechargeable battery 4 of the fourth embodiment, the first and second mounting grooves 451, 461 of the cap plate 420 are each provided with at least one first and second through-hole 452, 462 that penetrates in the thickness direction so as to be connected to the gas accommodation space 427. The first and second through-holes 452, 462 are connected to the gas accommodation space 427 on the side of the first and second mounting grooves 451, 461, respectively, to increase the gas accommodation space 427, thereby increasing the pressure relief capacity inside the cell.

The first and second through-holes 452, 462 may be formed in multiples, and may be formed with a maximum size in the center in the width direction of the cap plate 420. The size of the first and second through-holes 452, 462 gradually decreases toward both ends in the width direction. The first and second mounting grooves 451, 461 are formed with an area corresponding to the area of the first and second through-holes 452, 462, thereby ensuring the fixing force of the first and second vent plates 425, 426 that are fixed by welding.

In addition, the structure in which the sizes of the first and second through-holes 452, 462 gradually decrease from the center in the width direction to both ends reduces the action of the cell pressure, thereby preventing weakening of the fixing force of the first and second vent plates 425, 426 in the width direction of the cap plate 420.

When the vent hole 424 opens at an inner side in the thickness direction of the cap plate 420 due to the cut of the first vent plate 425 caused by the pressure inside the cell generated during charging and discharging of the rechargeable battery 4, although almost simultaneously, the gas accommodation space 427, formed larger than the vent hole 424, primarily relieves the internal pressure of the cell, and the first and second through-holes 452, 462, further extended in the thickness direction from the gas accommodation space 427, secondarily further relieve the internal pressure of the cell subsequently to the gas accommodation space 427.

Accordingly, the first vent plate 425 can be operated in an open state and the second vent plate 426 can be operated in a closed state, and in this case, the rechargeable battery 4 of the fourth embodiment can prevent a decrease in cell capacity, prevent an increase in internal resistance, and improve the capacity-related quality of the rechargeable battery 4 due to the relaxation of the internal pressure of the cell in the gas accommodation space 427 and the first and second through-holes 452, 462.

As described below, a battery module using one of the rechargeable batteries 1, 2, 3, 4 according to the first, second, third, and fourth embodiments of the present disclosure as a battery cell will be described.

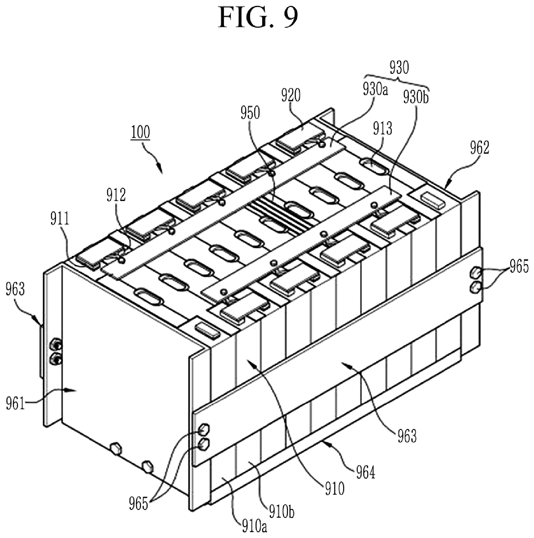

FIG. 9 is a perspective view of a battery module to which a rechargeable battery of an embodiment of the present disclosure can be applied. Referring to FIG. 9, a battery module 100 of one embodiment includes a plurality of battery cells 910 arranged in one direction and having electrode parts 911, 912, a connection tab 920 connecting a battery cell 910a to an adjacent battery cell 910b, and a protection circuit module 930 having one end connected to the connection tab 920. The battery cell 910 may be formed from one of the rechargeable batteries 1, 2, 3, 4 of the first, second, third, and fourth embodiments of the present disclosure. The protection circuit module 930 may be a battery management system (BMS). In addition, the connection tab 920 includes a body part 922 that contacts the electrode parts 911, 912 between adjacent battery cells 910a, 910b and an extension part that extends from the body part 922 and is connected to a protection circuit module 930. The connection tab 920 may be a bus bar.

First, the battery cell 910 may be composed of a battery case and an electrode assembly and electrolyte housed within the battery case. The electrode assembly and electrolyte react electrochemically to generate energy. One side of the battery cell 910 may be provided with terminal parts 911, 912 electrically connected to a connection tab 920 and a vent 913 which is a passage for discharging gas generated internally. The terminal parts 911, 912 of the battery cell 910 may be a positive electrode terminal 911 and a negative electrode terminal 912 having different polarities, and the terminal parts 911, 912 of adjacent battery cells 910a, 910b may be electrically connected in series or in parallel by a connection tab 920 to be described later. Meanwhile, the above description was given as an example of a serial connection, but it is not limited to this structure and various connection structures can be adopted as needed. In addition, the number and arrangement of battery cells are not limited to the structure illustrated in FIG. 9 and can be changed as needed.

A plurality of battery cells 910 may be arranged in one direction so that the wide surfaces of the battery cells 910 face each other (one another), and the arranged plurality of battery cells 910 may be fixed by a housing 961, 962, 963, 964. The housing 961, 962, 963, 964 may include a pair of end plates 961, 962 facing the wide surfaces of the battery cells 910, a side plate 963 connecting the pair of end plates 961, 962, and a bottom plate 964. The side plate 963 supports the side surfaces of the battery cells 910, and the bottom plate 964 may support the bottom surfaces of the battery cells 910. Additionally, the pair of end plates 961, 962, the side plate 963, and the bottom plate 964 may be connected by a member such as a bolt 965.

The protection circuit module 930 mounts electronic components and protection circuits, etc., and may be electrically connected to the connection tab 920 described below. The above protection circuit module 930 includes a first protection circuit module 930a and a second protection circuit module 930b extending from different positions along the direction in which a plurality of battery cells 910 are arranged. At this time, the first protection circuit module 930a and the second protection circuit module 930b are spaced apart from each other (one another) by a certain distance, but positioned parallel to each other (one another) so that they may be respectively electrically connected to adjacent connection tabs 920. For example, the first protection circuit module 930a is formed to extend on one upper side of the plurality of battery cells 910 along the direction in which the plurality of battery cells 910 are arranged, and the second protection circuit module 930b is formed to extend on the other upper side of the plurality of battery cells 910 along the direction in which the plurality of battery cells 910 are arranged. The second protection circuit module 930b is positioned to be spaced apart from the first protection circuit module 930a by a certain distance with the vent 913 therebetween, but may be arranged parallel to the first protection circuit module 930a. In this way, the two protection circuit modules are arranged parallel to each other (one another) and spaced apart from each other (one another) along the direction in which the multiple battery cells are arranged, thereby minimizing the area of the PCB (Printed Circuit Board) constituting the protection circuit module. The unnecessary PCM area is minimized by configuring the protection circuit module as two separate protection circuit modules. In addition, the first protection circuit module 930a and the second protection circuit module 930b can be connected to each other (one another) by a conductive connecting member 950. At this time, one side of the connecting member 950 is connected to the first protection circuit module 930a, and the other side is connected to the second protection circuit module 930b, so that an electrical connection can be made between the two protection circuit modules.

The connection can be made by any one of soldering, resistance welding, laser welding or projection welding methods.

And, the connecting member 950 may be, for example, an electric wire. Additionally, the connecting member 950 may be made of a material having elasticity or flexibility. By means of this connecting member 950, the voltage, temperature, and current of multiple battery cells 910 can be checked and managed to ensure they are normal. That is, information such as voltage, current, and temperature received by the first protection circuit module from its adjacent connection tabs, and information such as voltage, current, and temperature received by the second protection circuit module from its adjacent connection tabs, may be integrated and managed by the protection circuit module through the connecting member.

In addition, when the battery cell 910 swells, the impact is absorbed by the elasticity or flexibility of the connecting member 950, thereby preventing the first and second protection circuit modules 930a, 930b from being damaged.

In addition, the shape and structure of the connecting member 950 are not limited to the shape illustrated in FIG. 9.

In this way, since the protection circuit module 930 is provided with the first and second protection circuit modules 930a, 930b, the area of the PCB constituting the protection circuit module can be minimized, thereby securing space inside the battery module. This improves work efficiency by facilitating the fastening work of connecting the connection tab 920 and the protection circuit module 930, as well as facilitating repairs when an abnormality is detected in the battery module.

Although the preferred embodiment of the present disclosure has been described above, the present disclosure is not limited thereto, and it is possible to make and implement various modifications within the scope of the claims, the detailed description, and the accompanying drawings, and it is obvious that such modifications also fall within the scope of the present disclosure.

### <Description of symbols>

| | | | |
|---|---|---|---|
| 1, 2, 3, 4: | rechargeable battery | 10: | electrode assembly |
| 11: | first electrode (negative electrode) | | |
| 11a, 12a: | coated portion | | |
| 11b, 12b: | uncoated portion | | |
| 12: | second electrode (positive electrode) | | |
| 13: | separator | 20: | cap plate |
| 24: | vent hole | 25: | first vent plate |
| 26: | second vent plate | 27: | gas accommodation space |
| 220: | cap plate | 224: | vent hole |
| 241: | inner surface | 251, 261: | first, second mounting groove |
| 253, 254: | first, second mounting plate | | |
| 271, 272: | first, second accommodation space | | |
| 273: | third accommodation space | | |
| 354: | second mounting plate | | |
| 420: | cap plate | 427: | gas accommodation space |
| 451, 461: | first, second mounting groove | E1: | expansion space |
| M1: | corresponding space | | |

The present disclosure additionally includes the following numbered embodiments:
1. A rechargeable battery comprising:
   an electrode assembly including a first electrode, a second electrode, and a separator interposed between the first electrode and the second electrode;
   a case accommodating the electrode assembly;
   a cap plate coupled to an opening of the case; and
   a first vent plate and a second vent plate which are disposed in a vent hole of the cap plate and disposed in an inner side and an outer side of the cap plate in a thickness direction, respectively,
   wherein the cap plate comprises a gas accommodation space that is expanded beyond an inner surface of the vent hole between the first vent plate and the second vent plate.
2. The rechargeable battery of embodiment 1, wherein:
   The cap plate has a first mounting groove, located on an inner side in the thickness direction, that is expanded beyond an inner surface of the vent hole and corresponds to a thickness of the first vent plate, and
   the first vent plate is welded to the first mounting groove.
3. The rechargeable battery of embodiment 2, wherein:
   the gas accommodation space comprises a corresponding space corresponding to an area of the first mounting groove.
4. The rechargeable battery of embodiment 3, wherein:
   the gas accommodation space comprises an expansion space formed to be larger than an area of the first mounting groove in a length direction of the cap plate.
5. The rechargeable battery of embodiment 2, wherein:
   in the first mounting groove of the cap plate,
   at least one first through-hole penetrating in the thickness direction is provided so as to be connected to the gas accommodation space.
6. The rechargeable battery of embodiment 5, wherein:
   the first through-holes are formed in plurality, are formed to have a maximum size at a center in a width direction of the cap plate, and are formed to have a size that gradually decreases toward both ends in the width direction.
7. The rechargeable battery of embodiment 1, wherein:
   The cap plate has a second mounting groove that is on an outer side in the thickness direction, is expanded beyond an inner surface of the vent hole, and corresponds to a thickness of the second vent plate, and
   the second vent plate is welded to the second mounting groove.
8. The rechargeable battery of embodiment 7, wherein:
   the gas accommodation space comprises a corresponding space corresponding to an area of the second mounting groove.
9. The rechargeable battery of embodiment 8, wherein:
   the gas accommodation space comprises an expansion space formed to be larger than an area of the second mounting groove in the length direction of the cap plate.
10. The rechargeable battery of embodiment 9, wherein:
   in the second mounting groove of the cap plate,
   at least one second through-hole penetrating in the thickness direction is provided so as to be connected to the gas accommodation space.
11. The rechargeable battery of embodiment 10, wherein:
   the second through-holes are formed in plurality, are formed to have a maximum size at a center in a width direction of the cap plate, and are formed to have a size that gradually decreases toward both ends in the width direction.
12. The rechargeable battery of embodiment 1, wherein:
   the cap plate forms a gas accommodation space that is expanded beyond an inner surface of the vent hole between the first vent plate and the second vent plate in the thickness direction.
13. The rechargeable battery of embodiment 1, wherein:
   the gas accommodation space is extended, in the cap plate, further outward in a length direction of the cap plate beyond respective outermost edges of a first mounting groove in which the first vent plate is mounted, and a second mounting groove in which the second vent plate is mounted, and is formed to be concave toward a center of the vent hole.
14. The rechargeable battery of embodiment 1, wherein:
   when cutting the first vent plate, against the internal pressure of the cell,
   the second vent plate is exposed to a corresponding pressure for the vent hole, and
   the gas accommodation space expanded outside the vent hole is
   exposed to accommodation pressure in the inward, outward and lateral directions of the cap plate.
15. The rechargeable battery of embodiment 1, wherein:
   the cap plate forms a first accommodation space that is expanded beyond an inner surface of the vent hole in an inner side of the thickness direction, and
   the first vent plate is welded on an inner side in the thickness direction through a first mounting plate having a size larger than that of the first accommodation space in a length direction of the cap plate.
16. The rechargeable battery of embodiment 1, wherein:
   the cap plate forms a second accommodation space that is expanded beyond an inner surface of the vent hole on an outer side in the thickness direction, and
   the second vent plate is welded on the outer side in the thickness direction through a second mounting plate having a size larger than that of the second accommodation space in a length direction of the cap plate.
17. The rechargeable battery of embodiment 16, wherein:
   the second mounting plate
   further includes a third accommodation space further expanded in a thickness direction of the cap plate than the second accommodation space.
18. The rechargeable battery of embodiment 17, wherein:
   the third accommodation space
   further extends in a length direction of the cap plate than the second accommodation space.

## Claims

1. A rechargeable battery (1, 2, 3, 4) comprising:
an electrode assembly (10) including a first electrode (11), a second electrode (12), and a separator (13) interposed between the first electrode (11) and the second electrode (12);
a case (15) accommodating the electrode assembly (10);
a cap plate (20) coupled to an opening of the case (15); and
a first vent plate (25) and a second vent plate (26) which are disposed in a vent hole (24) of the cap plate (20) and disposed in an inner side and an outer side of the cap plate (20) in a thickness direction, respectively,
wherein the cap plate (20) comprises a gas accommodation space (27) that is expanded beyond an inner surface (241) of the vent hole (24) between the first vent plate (25) and the second vent plate (26).

2. The rechargeable battery (1, 2, 3, 4) of claim 1, wherein:
the cap plate (20) has a first mounting groove, located on an inner side in the thickness direction, that is expanded beyond an inner surface of the vent hole (24) and corresponds to a thickness of the first vent plate, and
preferably the first vent plate is welded to the first mounting groove.

3. The rechargeable battery (1, 2, 3, 4) of claim 2, wherein:
the gas accommodation space (27) comprises a corresponding space corresponding to an area of the first mounting groove; and/or
wherein:
the gas accommodation space (27) comprises an expansion space formed to be larger than an area of the first mounting groove in a length direction of the cap plate (20).

4. The rechargeable battery (1, 2, 3, 4) of claim 2 or 3, wherein:
in the first mounting groove of the cap plate (20),
at least one first through-hole penetrating in the thickness direction is provided so as to be connected to the gas accommodation space (27).

5. The rechargeable battery (1, 2, 3, 4) of claim 4, wherein:
the at least one first through-hole are formed in plurality, preferably formed to have a maximum size at a center in a width direction of the cap plate (20), and preferably formed to have a size that gradually decreases toward both ends in the width direction.

6. The rechargeable battery (1, 2, 3, 4) of any one of claims 1 to 5, wherein:
the cap plate (20) has a second mounting groove that is on an outer side in the thickness direction, is expanded beyond an inner surface of the vent hole (24), and corresponds to a thickness of the second vent plate, and
preferably the second vent plate is welded to the second mounting groove.

7. The rechargeable battery (1, 2, 3, 4) of claim 6, wherein:
the gas accommodation space (27) comprises a corresponding space corresponding to an area of the second mounting groove, and/or
the gas accommodation space (27) comprises an expansion space formed to be larger than an area of the second mounting groove in the length direction of the cap plate (20).

8. The rechargeable battery (1, 2, 3, 4) of claim 6 or 7, wherein:
in the second mounting groove of the cap plate (20),
at least one second through-hole penetrating in the thickness direction is provided so as to be connected to the gas accommodation space (27).

9. The rechargeable battery (1, 2, 3, 4) of claim 8, wherein:
the at least one second through-hole are formed in plurality, preferably formed to have a maximum size at a center in a width direction of the cap plate (20), and preferably formed to have a size that gradually decreases toward both ends in the width direction.

10. The rechargeable battery (1, 2, 3, 4) of any one of claims 1 to 9, wherein:
the cap plate (20) forms a gas accommodation space (27) that is expanded beyond an inner surface of the vent hole (24) between the first vent plate and the second vent plate in the thickness direction.

11. The rechargeable battery (1, 2, 3, 4) of any one of claims 1 to 10, wherein:
the gas accommodation space (27) is extended, in the cap plate (20), further outwardly in a length direction of the cap plate (20) beyond respective outermost edges of a first mounting groove in which the first vent plate is mounted, and a second mounting groove in which the second vent plate is mounted, and preferably formed to be concave toward a center of the vent hole (24).

12. The rechargeable battery (1, 2, 3, 4) of any one of claims 1 to 11, wherein:
when cutting the first vent plate, against the internal pressure of the cell,
the second vent plate is exposed to a corresponding pressure for the vent hole (24), and
the gas accommodation space (27) expanded outside the vent hole (24) is
exposed to accommodation pressure in the inward, outward and lateral directions of the cap plate (20).

13. The rechargeable battery (1, 2, 3, 4) of any one of claims 1 to 12, wherein:
the cap plate (20) forms a first accommodation space that is expanded beyond an inner surface of the vent hole (24) in an inner side of the thickness direction, and
preferably the first vent plate is welded on an inner side in the thickness direction through a first mounting plate having a size larger than that of the first accommodation space in a length direction of the cap plate (20).

14. The rechargeable battery (1, 2, 3, 4) of any one of claims 1 to 13, wherein:
the cap plate (20) forms a second accommodation space that is expanded beyond an inner surface of the vent hole (24) on an outer side in the thickness direction, and
preferably the second vent plate is welded on the outer side in the thickness direction through a second mounting plate having a size larger than that of the second accommodation space in a length direction of the cap plate (20).

15. The rechargeable battery (1, 2, 3, 4) of claim 14, wherein:
the second mounting plate
further includes a third accommodation space further expanded in a thickness direction of the cap plate (20) than the second accommodation space, and/or
wherein:
the third accommodation space
further extends in a length direction of the cap plate (20) than the second accommodation space.
